# EUROPÄISCHE PATENTSCHRIFT

(11) **EP 3 406 507 B1**
(45) Veröffentlichungstag und Bekanntmachung des Hinweises auf die Patenterteilung: **08.01.2020**
(21) Anmeldenummer: 18169610.5
(22) Anmeldetag: 26.04.2018
(51) Int. Cl.: B62D 15/02

(54) **VERFAHREN ZUM KALIBRIEREN DER LENKWINKELSENSORIK EINES KRAFTFAHRZEUGS**
METHOD FOR CALIBRATING THE STEERING ANGLE SENSOR SYSTEM OF A MOTOR VEHICLE
PROCÉDÉ D'ÉTALONNAGE DU CAPTEUR D'ANGLE DE DIRECTION D'UN VÉHICULE AUTOMOBILE

(30) Priorität: 08.05.2017 DE 102017207751
(43) Veröffentlichungstag der Anmeldung: 28.11.2018
(73) Patentinhaber: VOLKSWAGEN AKTIENGESELLSCHAFT, 38440 Wolfsburg (DE)
(72) Erfinder: Swieter, Ingo, 38162 Cremlingen (DE); Cisterna, Luis Alberto, 38126 Braunschweig (DE)

(56) Entgegenhaltungen:
- EP-A2- 1 992 549
- US-A- 5 465 210
- US-A1- 2006 293 818

## Beschreibung

Die Erfindung betrifft ein Verfahren zum Kalibrieren der Lenkwinkelsensorik eines Lenksystems eines Kraftfahrzeugs bei einem Software-Update gemäß dem Oberbegriff des Anspruchs 1.

Im Einzelnen ist der aktuelle Stand der Lenkwinkel-Kalibrierung bei einem elektrischen Lenksystem, dass der Lenkwinkel aus der Rotorlage des Elektromotors der elektrischen Lenkung berechnet wird, wobei die Information der Rotorlage nicht absolut ist. Mit anderen Worten, die Rotorlage muss immer auf die Nulllage der Lenksäule extern referenziert werden und der Wert der Rotorlage gegenüber der Nulllage wird flüchtig gespeichert. Wird nun die ECU spannungsfrei geschaltet oder die Software neu eingespeichert, so muss der Lenkwinkel erneut kalibriert bzw. initialisiert werden, wie dies oben beschrieben ist. Üblicherweise erfolgt die Referenzierung auf die Nulllage der Lenksäule über Diagnosetools in dem produzierenden Werk und erfolgt bei der ersten Inbetriebnahme des Fahrzeugs am Ende des Fertigungsbandes.

Daher muss die Lenkwinkelsensorik eines elektrischen Lenksystems eines Kraftfahrzeugs nach jedem Software-Update, im Folgenden kurz SW-Update bezeichnet, neu kalibriert werden, wobei die Kalibrierung mechanisch erfolgt. Zu diesem Zweck muss nach jedem Software-Update zur Kalibrierung per Lenkradbetätigung der gesamte Zahnstangenweg der Lenkung durchlaufen werden. Anschließend müssen über die ODIS-Schnittstelle entsprechende Kalibrierbefehle ausgeführt werden. Diese aktuelle Umsetzung der Lenkwinkelfunktionalität ermöglicht aufgrund der Kompexität nicht ein automatisches SW-Update bei einem Kundentermin. Zur Sicherstellung der Integrität der Daten wird der Anlernprozess bei einem SW-Update immer durchgeführt. Insbesondere würde eine Änderung des Lenkrades und damit auch der Zahnstange zu einer Verfälschung der Daten und damit zu einem falschen Lenkwinkel führen.

Die Druckschrift DE 10 2015 207 333 A1 beschreibt ein Verfahren und eine Vorrichtung zum Generieren des Lenkwinkels einer elektrischen Lenkung eines Fahrzeugs, bei dem zur Bestimmung des aktuellen Lenkwinkels an der Eingangswelle das Lenkwinkeläquivalent des Motorlagesensors durch einen Korrekturwinkel ergänzt wird. Dabei weist die elektrische Lenkung eine Eingangswelle, einen an der Eingangswelle angeordneten Lenkmomentsensor, eine Zahnstange, einen auf die Zahnstange wirkenden elektrischen Motor und einen Motorlagesensor auf, wobei aus den Signalen des Motorlagesensors ein Lenkwinkeläquivalent abgeleitet wird.

Die Druckschrift DE 10 2012 022 869 A1 betrifft einen Lenkwinkelsensor, mittels dem ein Winkel einer Lenksäule bestimmt wird, wobei die Lenksäule einen ersten Wellenabschnitt und einen zweiten Wellenabschnitt aufweist, die gegeneinander verdrehbar sind, wobei der Lenkwinkelsensor zwei magnetische Codespuren aufweist, aus deren Winkelinformationen auf den Winkel der Lenksäule, insbesondere den Winkel des ersten Wellenabschnitts geschlossen wird, wobei eine magnetische Codespur des Lenkwinkelsensors durch einen ersten Multipol-Magnetring eines Drehmomentsensors gebildet wird, der mit dem ersten Wellenabschnitt verbunden ist und dem ein Magnetfeldsensor zugeordnet ist.

Die Druckschrift DE 10 2012 012 386 A1 betrifft ein Verfahren zur Bestimmung der mechanischen Endanschläge zwischen einer Eingangswelle und einer Ausgangswelle eines Lenksystems, die über ein Torsionselement drehelastisch verbunden sind, mittels einer Eingangswelle, einer Ausgangswelle, einem Torsionselement, einem Drehmomentsensor, einem Lenkwinkelsensor, einer Auswerteeinheit, einem Servomotor, einem Winkelsensor, einem Getriebe und einer Zahnstange, wobei anhand der Daten des Drehmomentsensors ein Drehmoment bestimmt wird und in Abhängigkeit des Drehmoments der Servomotor ein Unterstützungsmoment auf die Zahnstange aufbringt, wobei der Winkelsensor einen Winkelverlauf der Ausgangswelle oder einen mit dem Winkelverlauf der Ausgangswelle gekoppelten Winkelverlauf ermittelt, wobei der Winkelverlauf des Winkelsensors mit dem Winkelverlauf des Lenkwinkelsensors verglichen wird, wobei bei einer Änderung der Winkelgeschwindigkeit des Lenkwinkelsensors die Winkelgeschwindigkeit des Winkelsensors ermittelt wird, wobei als minimaler bzw. maximaler Anschlagwinkel der Winkel am Drehmomentsensor festgelegt wird, bei dem die Differenz der Winkelgeschwindigkeiten von Lenkwinkelsensor und Winkelsensor kleiner/gleich einem Schwellwert ist.

Die Druckschrift EP 1 992 549 offenbart ein Verfahren zur Bestimmung einer absoluten Position eines Lenksystems eines Kraftfahrzeugs unter Verwendung eines elektrischen Motors für die Lenkunterstützung. Dafür werden eine Vielzahl von Winkelposition ermittelt, die sich mittels eines Rotorlagensensors zur Bestimmung der Rotorlage des elektrischen Motors bestimmen lassen. Zu Beginn einer Messung wird die aktuelle Winkelposition des elektrischen Motors ermittelt und an ein Steuergerät übermittelt. Ausgehend von diesen Informationen wird aus der Lage des elektrischen Motors für die Lenkunterstützung die Lage des Lenksystems errechnet.

Der Erfindung liegt daher die Aufgabe zugrunde, die Kalibrierung der Lenkwinkelsensorik des Lenksystems eines Kraftfahrzeugs bei einem Software-Update zu vereinfachen.

Diese Aufgabe wird durch ein Verfahren mit den Merkmalen des Anspruchs 1 gelöst. Bevorzugte Ausführungsformen der Erfindung sind Gegenstand der Unteransprüche.

Das erfindungsgemäße Verfahren zum Kalibrieren der Lenkwinkelsensorik eines elektrischen Lenksystems eines Kraftfahrzeugs bei einem Software-Update, wobei die Lenkwinkelsensorik einen Rotorlagesensor zur Bestimmung der Rotorlage des elektrischen Motors des elektrischen Lenksystems aufweist, und wobei der Lenkwinkel aus der Rotorlage abgeleitet wird, umfasst die Schritte:
- Starten des Software-Updates,
- Einlesen und Sichern der aktuellen Positionsdaten des elektrischen Motors des Lenksystems,
- Einlesen und Sichern der Speicherwerte der aktuellen Kalibrierung der Lenkwinkelsensorik,
- Zyklisches Überwachen der Rotorlage des elektrischen Motors mit dem Rotorlagesensor,
- Durchführen des Software-Updates,
- Abrechen des Software-Updates, wenn der Rotorlagesensor eine Bewegung des Rotors des elektrischen Motors detektiert, und
- Rückschreiben der Speicherwerte der Kalibrierung und Freigeben des Software-Updates, wenn keine Bewegung des Rotors detektiert wurde.

Vorzugsweise umfassen die Speicherwerte der Kalibrierung zumindest die SW-Endanschlagspositionen, die Lenkungsmitte, Index-Positionen und die Geradeauslaufkorrektur. Mit anderen Worten, bei einem erfolgreichen Software-Update werden die bei Software-Update zwischengespeicherten Kalibrierungswerte wieder zurückgeschrieben und weiterverwendet.

Weiter bevorzugt steht bei einem Abbruch des Software-Updates das elektrische Lenksystem für eine Wiederholung des Software-Updates zur Verfügung steht.

Weiter bevorzugt wird zur Verhinderung der Bewegung des Rotors des elektrischen Motors die Lenksäulenverriegelung nach dem Starten des Software-Updates verrastet.

Vorzugsweise wird bei einem Abbruch des Software-Updates aufgrund einer detektierten Bewegung des Rotors durch den Rotorlagesensor eine Fehlermeldung erzeugt und der Abbruch zentral auf dem Fahrzeugbus kommuniziert.

Mittels des oben geschilderten Verfahrens ist ein Updaten der Software der Lenkwinkelsensorik möglich ohne dass eine mechanische Neukalibrierung durchgeführt werden muss.

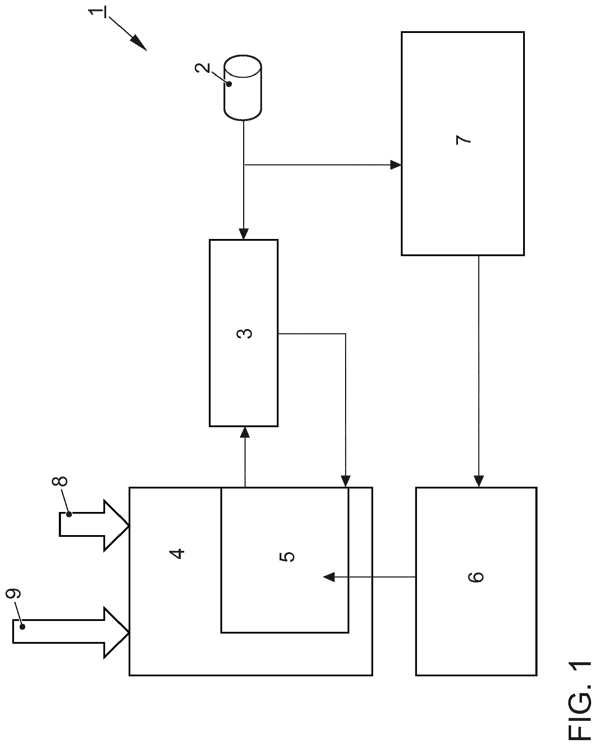

Eine bevorzugte Ausführungsform der Erfindung wird nachfolgend anhand der Zeichnung erläutert. Dabei zeigt
- Fig. 1: ein Blockdiagramm des Verfahrens zum Kalibrieren einer Lenkwinkelsensorik nach einem SW-Update.

Fig. 1 zeigt in schematischer Darstellung die Vorgehensweise der Lenkwinkelsensorik 1 eines elektrischen Lenksystems bei einem Software-Update in Form eines Blockdiagramms. Der Rotorlagesensor 2 des elektrischen Antriebs (nicht dargestellt) der elektrischen Lenkung gibt Messsignale an ein System-ASIC 3 ab, d.h. eine anwendungsspezifische integrierte Schaltung, das die Signale des Rotorlagesensors 2 in eine für den Maincontroller 4 der Steuerung 1 verarbeitbare Winkelinformation umsetzt, und der im Maincontroller 4 angesiedelten Auswertungseinrichtung 5 des System-ASICs 3 zuführt. Eine Einrichtung 6 zur Überwachung eines Software-Updates überwacht im Fall eines Software-Updates kontinuierlich einerseits mittels der Auswerteeinrichtung 5 des System-ASICs 3 den Rotorlagesensor 2. Ferner erfolgt mittels einer Überwachungseinrichtung 7 eine direkte Überwachung des Rotorlagesensors 2 und bei einer erfolgten Bewegung des Rotors des elektrischen Antriebs wird diese Information der für den Software-Update zuständigen Überwachungseinrichtung 6 zugeführt. Bei einer direkten Detektion einer Bewegung des Rotors 2 wird durch die Überwachungseinrichtung 6 der Software-Update abgebrochen, der über die Fahrzeugbusanbindung 8 dem Maincontroller 4 zugeführt wird. Ferner erfolgt die Spannungsversorgung des Maincontrollers 4 mit dem Bordnetz des Fahrzeugs über eine entsprechende Anbindung 9.

### Bezugszeichenliste

- 1: Lenkwinkelsensorik
- 2: Rotorlagesensor
- 3: System-ASIC
- 4: Maincontroller
- 5: Auswertung des System-ASICs
- 6: Überwachung des Software-Updates
- 7: Überwachung Rotorlagesensor
- 8: Bordnetzanbindung
- 9: Fahrzeugbus

## Patentansprüche

1. Verfahren zum Kalibrieren der Lenkwinkelsensorik (1) eines elektrischen Lenksystems eines Kraftfahrzeugs bei einem Software-Update, wobei die Lenkwinkelsensorik (1) einen Rotorlagesensor (2) zur Bestimmung der Rotorlage des elektrischen Motors des elektrischen Lenksystems aufweist, und wobei der Lenkwinkel aus der Rotorlage abgeleitet wird, mit den Schritten:
- Starten des Software-Updates,
- Einlesen und Sichern der aktuellen Positionsdaten des elektrischen Motors des Lenksystems,
- Einlesen und Sichern der Speicherwerte der aktuellen Kalibrierung der Lenkwinkelsensorik (1),
- Zyklisches Überwachen der Rotorlage des elektrischen Motors mit dem Rotorlagesensors (2),
- Durchführen des Software-Updates,
- Abrechen des Software-Updates, wenn der Rotorlagesensor (2) eine Bewegung des Rotors des elektrischen Motors detektiert, und
- Rückschreiben der Speicherwerte der Kalibrierung, wenn keine Bewegung des Rotors detektiert wurde und Freigeben des Software-Updates.

2. Verfahren nach Anspruch 1, **dadurch gekennzeichnet, dass** die Speicherwerte der Kalibrierung zumindest die SW-Endanschlagspositionen, die Lenkungsmitte, Index-Positionen und die Geradeauslaufkorrektur umfassen.

3. Verfahren nach einem der vorangegangenen Ansprüche, **dadurch gekennzeichnet, dass** bei einem Abbruch des Software-Updates das elektrische Lenksystem für eine Wiederholung des Software-Updates zur Verfügung steht.

4. Verfahren nach einem der vorangegangenen Ansprüche, **dadurch gekennzeichnet, dass** zur Verhinderung der Bewegung des Rotors des elektrischen Motors die Lenksäulenverriegelung nach dem Starten des Software-Updates verrastet wird.

5. Verfahren nach einem der vorangegangenen Ansprüche, **dadurch gekennzeichnet, dass** bei einem Abbruch des Software-Updates aufgrund einer detektierten Bewegung des Rotors durch den Rotorlagesensor (2) eine Fehlermeldung erzeugt wird.

## Claims

1. A method for calibrating the steering angle sensor technology (1) of an electric steering system of a motor vehicle during a software update, wherein the steering angle sensor technology (1) has a rotor position sensor (2) for determining the rotor position of the electric motor of the electric steering system and wherein the steering angle is derived from the rotor position, with the steps:
- starting the software update,
- reading and backing up the current position data of the electric motor of the steering system,
- reading and backing up the stored values of the current calibration of the steering angle sensor technology (1),
- cyclical monitoring of the rotor position of the electric motor with the rotor position sensor (2),
- executing the software update,
- interrupting the software update if the rotor position sensor (2) detects a movement of the rotor of the electric motor, and
- writing back the stored values of the calibration if no movement of the rotor was detected and releasing the software update.

2. The method according to claim 1, **characterized in that** the stored values of the calibration comprise at least the software end stop positions, the steering centre, index positions and the directional stability correction.

3. The method according to one of the preceding claims, **characterized in that** in an interruption of the software update the electric steering system is available for repeating the software update.

4. The method according to one of the preceding claims, **characterized in that** in order to prevent the movement of the rotor of the electric motor, the steering column lock is latched after starting the software update.

5. The method according to one of the preceding claims, **characterized in that** a fault message is generated in case of an interruption of the software update because of a detected movement of the rotor by the rotor position sensor (2).

## Revendications

1. Procédé pour l'étalonnage du capteur d'angle de direction (1) d'un système de direction électrique d'un véhicule automobile pendant une mise à jour de logiciel, le capteur d'angle de direction (1) comportant un capteur de position de rotor (2) pour la détermination de la position du rotor du moteur électrique du système de direction électrique, et l'angle de direction étant dérivé de la position du rotor, avec les étapes:
- lancer la mise à jour du logiciel,
- lire et sauvegarder des données de position actuelles du moteur électrique du système de direction,
- lire et sauvegarder des valeurs mémorisées de l'étalonnage actuel du capteur d'angle de direction (1),
- surveiller cycliquement la position du rotor du moteur électrique avec le capteur de position de rotor (2),
- exécuter la mise à jour du logiciel,
- interrompre la mise à jour du logiciel, si le capteur de position de rotor (2) détecte un mouvement du rotor du moteur électrique, et
- réécrire des valeurs mémorisées de l'étalonnage, si aucun mouvement du rotor n'a été détecté et autoriser la mise à jour du logiciel.

2. Procédé selon la revendication 1, **caractérisé en ce que** les valeurs mémorisées de l'étalonnage comprennent au moins les positions de butée d'extrémité du logiciel, le centre de la direction, les positions d'indices et la correction de la stabilité directionnelle.

3. Procédé selon l'une des revendications précédentes, **caractérisé en ce que**, en cas d'interruption de la mise à jour du logiciel, le système de direction électrique est disponible pour une répétition de la mise à jour du logiciel.

4. Procédé selon l'une des revendications précédentes, **caractérisé en ce que**, pour empêcher le mouvement du rotor du moteur électrique, le dispositif de verrouillage de colonne de direction est enclenché après le lancement de la mise à jour du logiciel.

5. Procédé selon l'une des revendications précédentes, **caractérisé en ce que**, en cas d'interruption de la mise à jour du logiciel à cause d'un mouvement du rotor détecté par le capteur de position de rotor (2), un message d'erreur est généré.
